Europäisches Patentamt

European Patent Office

Office européen des brevets

(11) Publication number : **0 542 498 A2**

# EUROPEAN PATENT APPLICATION

(21) Application number : 92310233.9

(22) Date of filing : 09.11.92

(51) Int. Cl.⁵ : **C08J 3/03,** C08J 3/26,
C08G 77/08, // C08L83/04

(30) Priority : **13.11.91 US 790918**

(43) Date of publication of application :
**19.05.93 Bulletin 93/20**

(84) Designated Contracting States :
**DE FR GB**

(71) Applicant : **DOW CORNING CORPORATION**
**3901 S. Saginaw Road**
**Midland Michigan 48686-0994 (US)**

(72) Inventor : **Craig, Brian Eric**
**1305 Evamar drive**
**Midland, Michigan (US)**

Inventor : **Dunning, Christopher John**
**2601 Wilder Road**
**Midland, Michigan (US)**
Inventor : **Liles, Donald Taylor**
**1205 Wakefield**
**Midland, Michigan (US)**
Inventor : **Lyon, Gloria Janik**
**1308 Timber Drive**
**Midland, Michigan (US)**
Inventor : **Kalinowski, Robert Edward**
**4426 South Nine Mile Road**
**Auburn, Michigan (US)**

(74) Representative : **Laredo, Jack Joseph et al**
**Elkington and Fife Prospect House 8**
**Pembroke Road**
**Sevenoaks, Kent TN13 1XR (GB)**

(54) Clear silicone waterbased elastomers.

(57)   Aqueous silicone emulsions which dry to a clear elastomer comprise emulsions which contain 100 parts by weight of crosslinked polydiorganosiloxane in the form of a dispersed phase with less than 10 percent of the dispersed phase particles having a particle size greater than 1000 nanometers and from 0.7 to 2.0 parts of a surfactant of the formula $RSO_4M$, where R is a hydrocarbon radical of from 6 to 20 carbon atoms and M is selected from the group consisting of alkali metal cations and ammonium derivatives. A preferred method of crosslinking is by the use of an alkoxysilane and tin catalyst. The emulsion can be reinforced by addition of colloidal silica dispersions, fumed silica and precipitated silica, in which the silica particles have an average particle diameter of less than 60 nanometers, to give compositions useful as coatings and sealants.

EP 0 542 498 A2

This invention relates to aqueous silicone emulsions which give a clear elastomer when the water is removed.

When polydiorganosiloxane cyclics or oligomers are polymerized in emulsions, the result is generally a white, opaque emulsion. When the emulsion is modified by adding a crosslinker and catalyst and then dried, the result is generally an opaque or partially opaque elastomer. Emulsions such as those taught in U.S. Patent No. 3,294,725, issued December 27, 1966 are of this nature.

U.S. Patent No. 3,360,491, issued December 26, 1967 teaches a method of polymerizing siloxanes and silcarbanes. The method employs organic sulfates of the general formula $R'OSO_2OH$, wherein $R'$ is a monovalent aliphatic hydrocarbon radical of at least 6 carbon atoms, as the primary catalyst for polymerization. The examples show the production of polymeric fluids.

U.S. Patent No. 3,575,910, issued April 20, 1971 teaches siloxane-acrylate copolymers and their emulsions. The emulsions are said to give clear films upon removal of the water.

U.S. Patent No. 3,697,469, issued October 10, 1972 teaches a method for the emulsion polymerization of organosiloxanes. The method emulsifies an organosiloxane in water containing a salt-type or salt form of an anionic surface active agent and then brings the emulsion into contact with an acid type cationic exchange resin to turn the surface active agent into an acid type, thereby starting the polymerization of the organosiloxane.

A composition which may be used as an emulsifier with diorganopolysiloxanes to form transparent microemulsions is taught in U.S. Patent No. 3,975,294, issued August 17, 1977. A process for preparing a transparent aqueous micro-emulsion or transparent gel is claimed in U.S. Patent No. 4,052,331, issued October 4, 1977 An elastomer is not taught as the product obtained from removing the water from these materials.

Microemulsions of polydiorganosiloxanes are taught in U.S. Patent No. 4,620,878, issued November 4, 1986. These are clear emulsions, but there is no indication that the product upon removal of the water is clear or elastomeric.

An aqueous silicone emulsion comprising 100 parts by weight of crosslinked polydiorganosiloxane in the form of a dispersed phase in water with less than 10 percent of the dispersed phase particles having a particle size greater than 1000 nanometers and from 0.7 to 2.0 parts by weight of a surfactant of the formula $RSO_4M$, where R is a hydrocarbon radical of from 6 to 20 carbon atoms and M is selected from the group consisting of alkali metal cations and ammonium derivatives, yields a clear elastomer upon removal of the water. A preferred crosslinking method is by use of an alkoxysilane and tin catalyst. The emulsion can be reinforced by the addition of colloidal silica dispersion or fumed or precipitated silica, either dry or as a dispersion, in which the silica particles have an average particle diameter of less than 60 nanometers.

This invention relates to an aqueous silicone emulsion comprising (A) 100 parts by weight of crosslinked polydiorganosiloxane in the form of a dispersed phase with less than 10 percent of the dispersed phase particles having a particle size greater than 1000 nanometers, (B) from 0.7 to 2.0 parts by weight of surfactant of the formula $RSO_4M$ where R is a hydrocarbon radical of from 6 to 20 carbon atoms and M is selected from the group consisting of alkali metal cations and ammonium derivatives, and (C) from 32 to 900 parts by weight of water, the emulsion yielding a clear elastomer upon removal of the water.

A process for producing the above described aqueous silicone emulsion comprises (A) emulsifying a mixture of (1) from 0.7 to 2.0 parts by weight of surfactant of the formula $RSO_4M$, where R is a hydrocarbon radical of from 6 to 20 carbon atoms and M is selected from the group consisting of alkali metal cations and ammonium derivatives, and (2) from 32 to 900 parts by weight of water, (3) 100 parts by weight of a hydroxyl endblocked polydiorganosiloxane, to give a dispersed phase of polydiorganosiloxane particles with less than 10 percent of the dispersed particles having a particle size greater than 1000 nanometers; (B) replacing the M ion of the surfactant with hydrogen by either exposure to ion exchange resin or addition of strong acid and then allowing the polydiorganosiloxane in the dispersed phase to polymerize until the desired molecular weight is reached, then; (C) adding sufficient base to raise the pH to greater than 5, then; (D) crosslinking the dispersed polydiorganosiloxane; to give an emulsion which yields a clear silicone elastomer upon removal of the water.

An alternate method of producing the aqueous silicone emulsion of this invention comprises (A) mixing (1) from 0.7 to 2.0 parts by weight of surfactant of the formula $RSO_4M$ where R is a hydrocarbon radical of from 6 to 20 carbon atoms and M is selected from the group consisting of alkali metal cations and ammonium derivatives, and (2) from 32 to 900 parts by weight of water; (B) replacing the M ion of the surfactant with hydrogen by either exposure to ion exchange resin or addition of strong acid; (C) adding 100 parts by weight of a hydroxyl endblocked polydiorganosiloxane, then; (D) emulsifying the mixture to give a dispersed phase of polydiorganosiloxane particles with less than 10 percent of the dispersed particles having a particle size greater than 1000 nanometers; (E) allowing the polydiorganosiloxane in dispersed phase to polymerize until the desired molecular weight is reached, then; (F) adding sufficient base to raise the pH to greater than 5, then; (G) crosslinking the dispersed polydiorganosiloxane, to give an emulsion which yields a silicone elastomer upon removal of the water.

A process for crosslinking and reinforcing the above emulsion to give a material which is useful as a coating material begins at step (C) or (F) in the two respective processes described above and continues as: then (G) adding from 0.25 to 5.0 parts of a crosslinker of the formula $R'_nSi(OR'')_{4-n}$ where $R'$ is a substituted alkyl radical of 1 to 6 carbon atoms, $R''$ is an alkyl radical of 1 to 3 carbon atoms and n is 0 or 1, then (H) adding from 0.25 to 1.0 parts of an organic tin catalyst, then (I) allowing the ingredients to react at room temperature for at least 15 minutes, (J) adding sufficient base to raise the pH to greater than 9, then (K) adding from 2.5 to 45 parts of colloidal silica as an aqueous dispersion, the silica having an average particle diameter of less than 60 nanometers, to give an emulsion having from 10 to 75 percent by weight solids content which yields a clear, reinforced silicone elastomeric coating upon removal of the water.

Clarity of the clear, reinforced silicone elastomeric coating obtained upon removal of the water can be measured by various methods. "clear" is defined as meeting a specified value from a given test method. The specified value is usually the maximum allowable for the test; if the coating measures at or below the specified value, the film is "clear".

Two test methods utilized in the experimental work in developing clear coatings from the emulsion of this invention use a spectrophotometer as the measuring device. The first of these methods measures light transmission through an unsupported film or a film on a transparent substrate such as polystyrene (optical grade). The reflectance curve measured from the light transmission through the test sample is compared to the reflectance curve from the light transmission through a standard. The standard can be air (for an unsupported film) or the transparent substrate without the coating film. From the comparison, a Delta E value is calculated. For this work, the Delta E was based on the FMC2 color model. Parameters of the testing included a 10 degree observer, daylight light source, ceramic tile calibration; specular component excluded and ultraviolet light (UV) component included. Films with Delta E values less than 40 are defined as "clear". Further reference to methods of measuring clarity are found in ASTM methods D 2244, E 179, E 308 and E 805.

A second method utilizing the spectrophotometer is referred to as a Contrast Ratio (C/R) test. This test is commonly used in the paint industry to measure film opacity or hiding. The test is used here in the same context; a lack of opacity is desired. The test consists of measuring the reflectance of a dried film that was drawn down over standard white and black colors. The reflectances are compared and a number, the C/R, is calculated from the comparison. Complete hiding has a C/R of 100, no hiding is theoretically a C/R of zero. For the results reported here in the examples, the films were drawn down at constant thickness on a Leneta opacity chart (Form 2A); this chart has the aforementioned standard white and black colors. The film reflectances were measured with a 10 degree observer, daylight light source, ceramic tile calibration, specular component excluded and UV component included. Films with C/R values of 8.0 or less are defined as "clear".

A process for crosslinking and reinforcing the above emulsion to give a material which is useful as a sealant material begins at step (C) or (F) in the two respective processes described above by using an emulsion with a solids content of from 40 to 75 percent, then continues as (G) adding from 0.25 to 5.0 parts of a crosslinker of the formula $R'_nSi(OR'')_{4-n}$ where $R'$ is a substituted alkyl radical of 1 to 6 carbon atoms, $R''$ is an alkyl radical of 1 to 3 carbon atoms and n is 0 or 1, then (H) adding from 0.25 to 1.0 parts of an organic tin catalyst, then (I) allowing the ingredients to react at room temperature for at least 15 minutes, (J) adding sufficient base to raise the pH to greater than 9, then (K) adding from 2.5 to 45 parts of colloidal silica as an aqueous dispersion, the silica having an average particle diameter of less than 60 nanometers; to give an emulsion having from 10 to 75 percent by weight solids content which yields a clear, reinforced silicone elastomeric coating upon removal of the water. At step (K) sufficient fume silica or organic thickening agent can be added to give a viscosity which does not run so that the sealant will remain where placed when extruded from the storage tube. The resultant material is a useful sealant material which will dry in place to give a clear, low modulus elastomer.

Aqueous emulsion polymerization as a means of obtaining emulsions of silicone polymers is taught in U.S. Patent No. 2,891,920, issued June 23, 1959 and in U.S. Patent No. 3,294,725, issued December 27, 1966. In these patents a great number of anionic, cationic and nonionic emulsifying agents are taught as being useful in the process of producing emulsions of polydiorganosiloxane. A method for polymerizing siloxanes and silcarbanes in emulsion employing organic sulfates of the general formula $R'OSO_2OH$, wherein $R'$ is a monovalent aliphatic hydrocarbon radical of at least 6 carbon atoms is disclosed in U.S. Patent No. 3,360,491, issued December 26, 1967. The emulsions, when broken by addition of acetone, gave polymeric fluids. When pigments were added to the emulsion, it could be used as a paint where a continuous coating was obtained when the pigmented emulsion was applied to a surface and the water allowed to dry. There is no teaching in the above patents as to how to obtain an emulsion which gives a clear elastomer upon removal of the water.

It has now been discovered that an emulsion which is produced from a hydroxyl endblocked polydiorganosiloxane by using from 0.7 to 2.0 parts by weight, per 100 parts by weight of the polydiorganosiloxane, of a surfactant of the formula $RSO_4M$, where R is a hydrocarbon radical of from 6 to 20 carbon atoms and M is selected from the group consisting of alkali metal cations and ammonium derivatives and where less than 10 percent of the dispersed phase particles of polydiorganosiloxane have a particle size of greater than 1000 nanometers (10,000 angstroms or 1 micrometer), will give a clear elastomer upon removal of the water from the emulsion. Emulsions of polydiorganosiloxane which do not use this surfactant within this range of amounts or which do not have dispersed particles within this range of sizes will not give a clear elastomer upon removal of the water, but will give a translucent or opaque elastomer, depending upon what surfactant is used and what particle size of dispersed phase is used.

The surfactant described above is a salt of an alkyl sulfate. The radical R is a (monovalent aliphatic) hydrocarbon radical of from 6 to 20 carbon atoms, such as hexyl, octyl, decyl, dodecyl, ceyl, stearyl and octynyl. Preferred is the lauryl (dodecyl) radical as it is most readily available. The M is selected from the group consisting of alkali metal cations and ammonium derivatives. The alkali metal cation is such as sodium or potassium, with sodium preferred. An ammonium derivative is a cation such as $NH_4^+$ or $HNR'_3^+$, where R' is a hydrocarbon radical such as methyl. The preferred surfactant is sodium lauryl sulfate, because of its commercial availability. The amount of surfactant used is critical in obtaining a clear elastomer from the emulsion when the water is removed. Use of less than the specified amount of surfactant will result in an emulsion which is not stable upon storage. Use of more than the specified amount-of surfactant will give an elastomer which is too hazy to-be classified as clear.

The hydroxyl endblocked polydiorganosiloxane is of the formula $HO\text{-}(R_2SiO)_nH$ where R can be any monovalent hydrocarbon radical such as alkyl radicals such as methyl, ethyl, propyl, octadecyl and myricyl: alkenyl radicals such as vinyl, allyl, methallyl, hexanyl and butadienyl; cycloaliphatic radicals such as cyclobutyl, cyclohexyl, cyclopentenyl and cyclohexadienyl; aryl; hydrocarbon radicals such as phenyl, tolyl, naphthyl, mesityl, thymyl and xenyl; and aralkyl hydrocarbon radicals such as benzyl and benzhydryl; halogenated monovalent hydrocarbon radicals such as chlorophenyl, trifluorotolyl, trifluorovinyl, 3,3,3,-trifluoropropyl and tetrabromoxenyl. Preferably, R is a monovalent hydrocarbon radical containing less than 7 carbon atoms per radical or 2-(perfluoroalkyl)ethyl radicals having less then 7 carbon atoms per radical. The hydroxyl endblocked polydiorganosiloxane preferably contains organic radicals in which at least 50 percent are methyl. The hydroxyl endblocked polydiorganosiloxane is essentially a linear polymer containing two organic groups per silicone atom but may include trace amounts on monoorganosiloxane or triorganosiloxy units present as impurities of the manufacturing process. The preferred hydroxyl endblocked polydiorganosiloxane is a hydroxyl endblocked polydimethylsiloxane. It is preferred that n is such that the viscosity of the polydiorganosiloxane is less than 0.3 Pa·s at 25°C., with a most preferred viscosity of less than 0.1 Pa·s. Higher viscosities can be used, but they are more difficult to emulsify to the required particle size.

The amount of water used in the process can vary from 32 to 900 parts by weight per 100 parts by weight of the polydiorganosiloxane. The amount of water used is dependent upon the desired solids content of the emulsion. Emulsions for use as coatings are commonly in the range of about 10 to 75 percent solids, while emulsions for use in sealants are commonly in the range of about 55 to 75 percent solids.

The mixture of surfactant, water and polydiorganosiloxane can be emulsified in any of the well known pieces of equipment for such use, such as homogenizers, sonolators and colloid mills. Each of these is a piece of equipment designed to shear the fluids at high speed and pressure so as to reduce the dispersed phase to a fine particle size. The method and equipment used must be such that the emulsion formed has dispersed particles of polydiorganosiloxane which are such that less than 10 percent of the particles are greater than 1000 nanometers in diameter. It is preferred that the average particle size of the dispersed particles is from 200 to 500 nanometers with less than 5 percent of the particles greater than 1000 nanometers in diameter. The particle size and distribution can be adjusted by changing the pressure on the fluid, the number of passes through the machine and by the starting viscosity of the polydiorganosiloxane. Those skilled in the art can achieve the required particle size and distribution by using the required polydiorganosiloxane and surfactant using techniques well known in the art.

The surfactant shown above will provide an emulsion of the polydiorganosiloxane, but will not cause the desired polymerization of the polydiorganosiloxane to a higher molecular weight polymer until M is replaced with hydrogen. This can be done by use of an ion exchange resin, such as DOWER HCRW2H, or by use of a strong acid, such as hydrochloric, sulfuric or nitric acid to give $RSO_4H$, which is both a polymerization catalyst and a surfactant. The conversion can take place at any time during the homogenization step. The surfactant (1) and water (2) can be mixed together and then reacted with either an ion exchange resin or strong acid to give the alkylhydrogensulfate, then the polydiorganosiloxane (3) can be added and the mixture emulsified. The surfactant (1), water (2) and polydiorganosiloxane (3) can be mixed, then the mixture treated with an ion exchange resin or strong acid to give the alkylhydrogensulfate, then the mixture can be emulsified. The surfactant (1), water (2) and polydiorganosiloxane (3) can be emulsified to give an emulsion, then the emulsion treated with an ion exchange resin or strong acid to give the alkylhydrogensulfate. In each case, once the ingredients are mixed, the alkylhydrogensulfate is present and the emulsion is formed, the polydiorganosiloxane will condense to give a higher molecular weight polymer. It is not necessary to replace all of the M cations. Sufficient M cations must be replaced in order to obtain polymerization in a reasonable time period. The polydiorganosiloxane should be polymerized until the molecular weight is greater than 50,000, preferably 100,000 or greater. The high polymer is necessary in order to obtain the desired physical properties in the elastomer produced by removing the water from the emulsion.

When the polymerization has proceeded to the desired degree, the polymerization process is stopped by adding sufficient base to the emulsion to raise the pH to greater than 5, preferably to between 7 and 10. Preferred base is an alkaline metal hydroxide or carbonate, such as sodium hydroxide, sodium carbonate, potassium hydroxide and potassium carbonate; and a derivative of nitrogen, such as ammonia or amines, such as ammonium hydroxide, diethylamine and 2-amino-2-methyl-1-propanol.

After the emulsion of polydiorganosiloxane has been polymerized to the desired degree, the polydiorganosiloxane is crosslinked so that when the emulsion is dried by removal of the water, the resulting polymer is an elastomer. The polydiorganosiloxane can be crosslinked by any of the known methods of doing so, there is no restrictions known at the present time as to how the polydiorganosiloxane should be crosslinked.

Removal of water from uncrosslinked emulsion polymers produces sticky, tacky, silicone gums, which are non-elastomeric, but if produced by the method of this invention, they would be clear. Removal of water from silicone emulsion polymers that have been crosslinked produces tack free elastomers.

There are numerous methods for crosslinking silicone emulsion polymers. The most common method uses silicic acid (derived from silica) and a dialkyltindicarboxylate curing catalyst as described in Johnson et al., U.S. 4,221,688. A related method uses an alkoxysilane and a divalent tin catalyst as described in Liles, U.S. 4,954,565.

Another method for crosslinking silicone emulsion polymers utilizes copolymerization. A small amount of a multifunctional crosslinker such as methyltrimethoxysilane is emulsion copolymerized with oligomeric polydiorganosiloxanes as described in Findlay and Weyenberg, U.S. 3,294,725. Additional examples of crosslinking silicone emulsions by copolymerization are given in Huebner and Saam, U.S. Patent No. 4,567,231, Huebner and Landis, U.S. 4,661,556 and Bauman and Huebner, U.S. 4,618,645.

Still other methods for crosslinking silicone emulsion polymers use an organosilicon hydride and a platinum catalyst as taught by Willing, U.S. 4,248,751 and Liles, U.S. 5,001,186. Related methods for crosslinking silicone emulsion polymers use an organosilicon hydride and a tin catalyst as taught by Kondo and Koshii, U.S. 4,782,112 and Liles, U.S. 4,962,153.

It is also possible to crosslink silicone emulsion polymers by exposing the emulsion to high energy radiation or the combined action of heat and an organic peroxide as taught by Saam and Wegener, U.S. 4,273,634.

As all of these methods produce crosslinked silicone emulsion polymer or precured silicone emulsion, all of them fall within the scope of the instant invention. The preferred method for crosslinking silicone emulsions is with the use of a tin catalyst as taught by Johnson, Saam and Schmidt, U.S. 4,221,688 and Liles, U.S. 4,954,565.

The emulsion of this invention gives a clear silicone elastomer upon removal of the water. For reasons not fully understood, the dispersed particles of crosslinked polydiorganosiloxane which are present in the emulsion coalesce upon removal of the water to form an elastomeric mass having a non-tacky surface and having significant physical properties such as tensile strength and elongation.

A clear, elastomeric coating composition can be prepared from the above clear elastomeric emulsion when the proper emulsion, reinforcing silica, cross-linker and catalyst are chosen. The emulsion should have a solids content of from 10 to 75 percent by weight, preferably from 64 to 72 percent and most preferably from 70 to 72 percent. The emulsion preferably has a mean particle diameter of less than 600 nanometers and, most preferably, of less than 500 nanometers, with 99 percent of the particle diameters less than 1200 nanometers and most preferably less than 1000 nanometers.

The crosslinker preferred is of the formula $R'_nSi(OR'')_{4-n}$ where $R'$ is a substituted alkyl radical of 1 to 6 carbon atoms, $R''$ is an alkyl radical of 1 to 3 carbon atoms and $n$ is 0 or 1. $R'$ is a radical such as chloropropyl, trifluoropropyl and 3-methacryloxypropyl, with chloropropyl the preferred radical. $R''$ is a radical such as methyl, ethyl and propyl, with methyl the preferred radical. The preferred crosslinker is chloropropyltrimethoxysilane. The preferred amount of crosslinker is 0.25 to 5 parts by weight per 100 parts by weight of the polydiorganosiloxane, with from 0.5 to 1.5 parts by weight more preferred and most preferred 1.0 parts by weight.

The preferred tin catalyst is from 0.25 to 1.0 parts by weight of stannous octoate per 100 parts by weight of polydiorganosiloxane, with from 0.25 to 0.5 parts preferred and 0.5 parts most preferred.

After the crosslinker and catalyst are added to the polydiorganosiloxane emulsion, the polymer becomes cross-linked while in the emulsion, giving emulsion particles of crosslinked polymer. The crosslinking reaction takes from 15 to 90 minutes at room temperature, with from 30 to 60 minutes sufficient for the preferred cross-

linker and catalyst.

The crosslinking step can be terminated by adding a base such as sodium hydroxide, ammonium hydroxide and amines such as 2-amino-2-methyl-1-propanol. Ammonium hydroxide is preferred.

The emulsion can then be reinforced by addition of colloidal silica dispersion. The colloidal silica dispersion used should consist of a dispersion of colloidal silica in water, not a dispersion of fumed silica in water. The dispersion should have an average particle size of less than 60 nanometers, preferably less than 20 nanometers and most preferably less than 8 nanometers. The silica level is from 2.5 to 45 parts by weight of colloidal silica per 100 parts by weight of polydiorganosiloxane, preferably from 10 to 25 parts and most preferably from 10 to 15 parts when the finished emulsion is to be used as a coating. Preferred colloidal silica dispersions are the dispersions commercially available from Nalco Chemical Company under the designations, Nalcoag 1115, 1130, 1140, 1050 and 1060, which are sodium stabilized, as well as 2327, which is ammonium stabilized. The preferred colloidal silica is Nalcoag 1115, which is an aqueous dispersion containing 15 percent by weight silica, the silica having an average particle size of about 4 nanometers and a surface area of about 750 $m^2/g$.

The coating emulsion compositions may also contain the common emulsion ingredients such as rheological thickeners, biocides and fungicides, coalescent aids, freeze-thaw stabilizers, antifoams and flattening agents. Any additive should, of course, be evaluated to make sure it does not adversely affect the clarity of the emulsion or the coating produced by removing the water from the emulsion. Useful thickeners are cellulose based, such as Natrosol and Methocel products; polyurethane associate types, such as SCT-275, RM 1020 and DSX 1514, alkali-swellable types such as ASE-75 and RM-5; and hybrids, such as Polyphobe series 102, 103, 104 or 107. Biocides and fungicides can be included to destroy or prevent the growth of fungi and- spores in the emulsion. Useful are Dowicil 75, Troysan Polyphase AF1, Skane M-8 and Kathon LX. Coalescing aids are solvents which aid in film formation by temporarily softening the polymer or fusing the particles together during drying. Examples include Texanol and polydimethylsiloxane cyclics or low molecular linear polymers. Freeze-thaw stabilizers aid in preventing the freezing of the emulsion at low temperatures by lowering the freezing point or sterically stabilizing the emulsion particles. The preferred stabilizers are long chain non-ionic surfactants such as alkylphenoxypolyethylene ethanols, polyethylene glycols, nonyl phenols and the like. A clear coating which is not reflective on the surface can be obtained by adding about 1 to 15 parts by weight of a fumed silica or precipitated silica to the emulsion.

A clear elastomeric sealant composition can be prepared from the above clear elastomeric emulsion when the proper emulsion, crosslinker, catalyst rheology modifiers, reinforcing fillers, freeze/thaw additives and adhesion promoters are chosen. The emulsion should have a solids content of from 40 to 75 percent, preferably 55-75 percent and most preferably from 65 to 72 percent. The emulsion preferably has a mean particle diameter of less than 600 nanometers and preferably less than 500 manometers with 99 percent of the particle diameters less than 1200 nanometers and most preferably less than 1000 nanometers.

The crosslinker preferred is of the above formula, with R′ preferably chloropropyl radical. Methyl is the preferred R″ radical. The preferred crosslinker is chloropropyltrimethoxysilane. The preferred amount of crosslinker is 0.25 to 5 parts by weight per 100 parts by weight of the polydiorganosiloxane, with from 0.5 to 1.5 parts by weight more preferred and most preferred 1.0 part by weight.

The preferred tin catalyst is from 0.25 to 1.0 part by weight of stannous octoate per 100 parts by weight of polydiorganosiloxane, with from 0.25 to 0.5 part preferred and 0.5 part most preferred.

After the crosslinker and catalyst are added to the polydiorganosiloxane emulsion, the polymer becomes cross-linked while in the emulsion, giving emulsion particles of crosslinked polymer. The crosslinking reaction takes from 15 to 90 minutes at room temperature, with from 15 to 30 minutes sufficient for the preferred crosslinker and catalyst.

The crosslinking step can be terminated by adding a base such as sodium hydroxide, ammonium hydroxide and amines such as 2-amino-2-methyl-1-propanol. The amine is preferred.

The above process gives a composition which dries to a low modulus elastomer. In order to be most useful as a sealant material the viscosity of the emulsion is raised to a point where it does not flow. The emulsion can be thickened by the addition of up to 5 parts of fumed silica or by the addition of organic thickening agents, as long as they are chosen so that the clarity is not destroyed. Additional colloidal silica can be added as taught above for coating materials, but this lowers the modulus of the resulting elastomer.

Additional ingredients such as adhesion promoters, freeze/thaw stabilizers and coalescent agents may be added to vary the properties of the silicone emulsion and/or the elastomer formed. Any additive should be evaluated to make sure it does not adversely effect the clarity of the emulsion or the elastomer produced.

Clear sealants are described as those clear enough so that one can read newsprint through a 1/4 inch thick bead of the sealant. Translucent sealants are clear enough so that one can see wood grain or a metal screw through a 1/4 inch thick bead.

A preferred process for producing an aqueous silicone emulsion which is useful as a sealant material comprises (A) mixing (1) from 0.7 to 2.0 parts by weight of surfactant of the formula $RSO_4M$ where R is a hydrocarbon radical of from 6 to 20 carbon atoms and M is selected from the group consisting of alkali metal cations and ammonium derivatives and (2) from 32 to 40 parts by weight of water; (B) replacing the M ion of the surfactant with hydrogen by either exposure to ion exchange resin or addition of strong acid; (C) adding 100 parts by weight of a hydroxyl endblocked polydiorganosiloxane, then (D) emulsifying the mixture to give a dispersed phase of polydiorganosiloxane particles with less than 10 percent of the dispersed particles having a particle size greater than 1000 nanometers; (E)allowing the polydiorganosiloxane in dispersed phase to polymerize until the desired molecular weight is reached, then (F) adding sufficient base to raise the pH to greater than 5, then (G) adding from 0.5 to 5 parts of precipitated or fumed silica having an average particle size of less than 60 nanometers and mixing until uniformly dispersed; (H) adding from 0.375 to 1.0 part of stannous octoate; (I) adding from 0.5 to 1.5 part of gamma-methacryloxypropyltrimetInoxysilane and allowing the mixture to react for at least 30 minutes, then (J) adding sufficient base to raise the pH above 9, then (K) admixing from 2 to 5 parts of colloidal silica having an average particle size less than 60 nanometers, as an aqueous dispersion, to give an emulsion having from 65 to 75 percent solids and a paste viscosity which dries to a clear, reinforced elastomer upon removal of the water.

The following examples are included for illustrative purposes only and should not be construed as limiting the invention which is properly set forth in the appended claims. Parts are parts by weight.

### Example 1

An emulsion of polydimethylsiloxane was prepared by first mixing 4 parts of Dupanol WAQE (30 percent by weight aqueous solution of sodium lauryl sulfate) with 21 parts of water. After stirring to homogeneity, 5 percent by weight of Dowex HCRW2H ion exchange resin was added to 100 parts of the water/emulsifier solution to exchange the sodium ion for a hydrogen ion. The ion exchange was complete within 30 minutes, with the pH at less than 1. The ion exchange resin was filtered out. Then 25 parts of the emulsifier water solution was stirred together with 75 parts of hydroxyl endblocked polydimethylsiloxane having a viscosity of about 0.08 Pa·s and the mixture was passed twice through a sonolator at 1800 psi. After 4.5 hours for polymerization, the emulsion was neutralized with 2N sodium hydroxide. The resultant emulsion had about 99 percent of the particles with a particle size size of from 500 to 550 nanometers. The Brookfield viscosity of the emulsion was about 40,000 centipoise. The coagulated polymer was characterized by GPC and found to have a Mn of 106,000 and a Mw of 220,000. The emulsion contained 100 parts of polydimethylsiloxane, 1.6 parts of sodium lauryl sulfate and 32 parts of water.

### Example 2

An emulsion was prepared in a manner similar to that of Example 1 using 73 parts of hydroxyl endblocked polydimethylsiloxane having a viscosity of about 80 centipoise, 4 parts of the Dupanol WAQE which had been converted to hydrogen lauryl sulfate with the ion exchange resin and 20 parts of water. After polymerization of the emulsion for 4 hours, the emulsion was neutralized with 2N sodium hydroxide. The finished emulsion had a solids content of about 73 percent by weight, a viscosity of about 100,000 and an average particle size of about 470 nanometers with less than 95 percent of the particles being greater than 1000 nanometers.

A silicone sealant was prepared using the above emulsion. First 100 parts of the above emulsion were placed in a mixer, then 2.5 parts of precipitated silica having an average particle size of about 19 nanometers and 170 $m^2$/g surface area was mixed in. This gave a thick material which allowed sufficient shear to properly disperse the silica in the emulsion. Then 0.5 part of stannous octoate was mixed in, followed by 1 part of gamma-methacryloxypropyltrimethoxysilane. The mixture was allowed to react for 30 minutes to crosslink the polydimethylsiloxane. Then 1 part of a 14 percent solution of ammonium hydroxide was added, followed by 2 parts of Nalco 1050 (a 50 percent by weight solids dispersion of colloidal silica having a particle size of about 20 nanometers and 150 $m^2$/g surface area manufactured by Nalco Chemical Company).

This neutralized silicone sealant was tested for physical properties. The sealant was cast as a 0.060 inch thick wet film. The sealant had a skin over time of 30 minutes. This is the time required at 25°C. and 50 percent relative humidity for the curing material to form a non-tacky surface film when tested by touching the surface lightly with a clean finger. The tack free time was 1 hour. This is the time required for the curing material to form a tack free surface when tested by placing a sheet of polyethylene film on the surface with a 1 ounce weight having an area of 2 square inches on the polyethylene, then after 4 seconds removing the film from the surface. After drying for 7 days, the cured film was cut into test samples and tested for durometer in accordance with ASTM D 2240 and for tensile strength and elongation in accordance with ASTM D 412. The durometer was 14 Shore A, the tensile strength was 69 pounds per square inch and the elongation was 1750 percent.

The film was measured for clarity on a Hunter Hazemeter and the Light transmittance was 85 percent and the haze was 99 percent.

Example 3

A series of silicone polymer emulsions were prepared following the procedure of Example 1. The number of passes through the sonolator and the time of polymerization are shown in Table I. The particle size and distribution of each was measured, as well as the weight average molecular weight. These are shown in Table I. Each emulsion was then formulated into a coating by admixing 0.5 parts of stannous octoate per 100 parts of emulsion solids and 1 part of chloropropyltrimethoxysilane, then allowing the mixture to react and crosslink for 30 minutes. Then 20 parts of colloidal silica per 100 parts of emulsion polymer, having an average particle diameter of 8 nanometers and a surface area of 375 $m^2/g$, in the form of a 30 percent solids dispersion in water was mixed in. Films were then cast of each coating material by pouring sufficient coating into a 35 mm diameter Petri dish to give a 0.012 to 0.015 inch thick dry film. After 7 days drying, the film clarity was measured in a spectrophotometer as FMC2-DE values from the FMC2 color model. The DE values were recorded from daylight source and 10 degree observer. The spectrophotometer was calibrated using the ceramic calibration procedure. Other settings were spectral component included, ultraviolet component included and a large area view for the sample port. The status was DTEIL. An empty Petri dish was used as the standard to compare to obtain the DE values. Cured films were measured twice and the reflectance values averaged for the results shown.

Additional films were cast in a 150 mm Petri dish to 0.030 inch wet thickness, dried and cut into test specimens and measured for tensile strength and elongation. The results are given in Table I.

Table I

| Sample | Particle Diameter nanometers | 99 % less than this diameter | Mol. Wt | Clarity FMC2 DE Initial | Passes No. | Poly Time hours |
|---|---|---|---|---|---|---|
| A | 710 | 1800 | 160,000 | 52.9 | 1 | 6.25 |
| B | 500 | 1140 | 130,000 | 48.4 | 2 | 2 |
| C | 500 | 1140 | 160,000 | 34.1 | 2 | 3.25 |
| D | 500 | 1140 | 250,000 | 41.0 | 2 | 5.5 |

| | Tensile Strength pounds/sq. inch | Elongation percent |
|---|---|---|
| A | 258 | 460 |
| B | 354 | 720 |
| C | 341 | 640 |
| D | 341 | 580 |

This data shows that the polymerization rate is dependent upon particle size and time at a given temperature.

Example 4

A silicone polymer emulsion was prepared following the procedure of Example 1 where the solids content of the emulsion was 64 percent by weight, the mean particle diameter was 443 nanometers and 99 percent of the particles were less than 1020 nanometers. A series of coatings were prepared from this emulsion by adding 0.5 part stannous octoate per 100 parts of the polymer, 1, 2.5 or 5 parts of crosslinker as shown in Table II and then allowing to react for 30, 60 or 90 minutes as shown in Table II. Then 2.5 parts of colloidal silica having 4 nanometers average particle size and 750 $m^2/g$ surface area was admixed. Films were cast and measured as in Example 3 with the results shown in Table II. The initial clarity is the as cast condition after 48 hours cure, the haze value is the clarity measurement after the, sample was exposed to 90 percent relative humidity at 25°C. for 48 hours and measured in the humidified condition.

## Table II

**Crosslinker:** Trifluoropropyltrimethoxysilane

| Crosslinker Level pph | Reaction Time minutes | Clarity FMC2-DE | | Durometer Shore A | Tensile Strength psi | Elongation percent |
|---|---|---|---|---|---|---|
| | | Initial | Haze | | | |
| 1.0 | 30 | 24.7 | 42.8 | 15 | 100 | 500 |
| | 60 | 30.7 | 24.3 | 15 | 87 | 420 |
| | 90 | 29.5 | 26.5 | 16 | 89 | 360 |
| 2.5 | 30 | 25.7 | 47.2 | 17 | 75 | 270 |
| | 60 | 25.5 | 33.3 | 17 | 85 | 310 |
| | 90 | 32.4 | 57.0 | 18 | 82 | 280 |
| 5.0 | 30 | 14.4 | 34.6 | 18 | 77 | 230 |
| | 60 | 18.5 | 45.8 | 20 | 80 | 270 |
| | 90 | 25.4 | 15.0 | 18 | 84 | 250 |

**Crosslinker:** Vinyltrimethoxysilane

| Crosslinker Level pph | Reaction Time minutes | Clarity FMC2-DE | | Durometer Shore A | Tensile Strength psi | Elongation percent |
|---|---|---|---|---|---|---|
| | | Initial | Haze | | | |
| 1.0 | 30 | 31.4 | 41.7 | 17 | 68 | 190 |
| | 60 | 31.0 | 13.6 | 18 | 62 | 170 |
| | 90 | 39.0 | 9.4 | 18 | 63 | 160 |
| 2.5 | 30 | 21.3 | 26.7 | 21 | 118 | 330 |
| 5.0 | 30 | 71.0 | 54.8 | 25 | 137 | 230 |

EP 0 542 498 A2

Table II (continued)

Crosslinker: Chloropropyltrimethoxysilane

| Crosslinker Level pph | Reaction Time minutes | Clarity FMC2-DE Initial | Clarity FMC2-DE Haze | Durometer Shore A | Tensile Strength psi | Elongation percent |
|---|---|---|---|---|---|---|
| 1.0 | 30 | 18.9 | 17.3 | 7 | 78 | 990 |
|  | 60 | 38.8 | 52.6 | 13 | 156 | 760 |
|  | 90 | 41.1 | 49.8 | 15 | 137 | 560 |
| 2.5 | 90 | 39.4 | 53.6 | 19 | 97 | 220 |
| 5.0 | 90 | 60.2 | 39.1 | 20 | 90 | 180 |

Crosslinker: 3-methacryloxypropyltrimethoxysilane

| Crosslinker Level pph | Reaction Time minutes | Clarity FMC2-DE Initial | Clarity FMC2-DE Haze | Durometer Shore A | Tensile Strength psi | Elongation percent |
|---|---|---|---|---|---|---|
| 1.0 | 30 | 31.1 | 49.8 | 8 | 145 | 1260 |
|  | 60 | 33.5 | 37.3 | 11 | 129 | 900 |
|  | 90 | 33.6 | 47.7 | 12 | 124 | 860 |
| 2.5 | 60 | 43.6 | 48.1 | 16 | 154 | 640 |
| 5.0 | 60 | 60.2 | 39.9 | 17 | 123 | 440 |

Each of the crosslinking silanes tested above is useable, the chloropropyltrimethoxysilane is preferred. The physical properties obtained vary with the reaction time. The optimum varies with the crosslinker type and level.

Example 5

The silicone emulsion of Example 4 was used in a series of mixtures made with various types of colloidal silica dispersions having differing average particle size and surface area. The silica level used was varied to take into account the various surface areas present. Each sample was catalyzed with 0.5 parts of stannous octoate per 100 parts of polymer and crosslinked for 30 minutes with 1.0 parts of chloropropyltrimethoxysilane. At the end of the crosslink time, the desired type and amount of silica was added. Films were then cast as above and tested for clarity, tensile strength and elongation. The results are shown in Table III.

Table III

| Avg. Particle Diameter nm | Surface Area m²/g | Level pph | Clarity FMC2-DE Initial | Haze | Tensile Strength psi | Elongation percent |
|---|---|---|---|---|---|---|
| 4 | 750 | 5.0 | 20.1 | 31.6 | 205 | 1791 |
|  |  | 10.0 | 13.8 | 13.4 | 419 | 1440 |
|  |  | 15.0 | 21.9 | 20.5 | 497 | 1366 |
|  |  | 20.0 | 36.6 | 34.1 | 408 | 703 |
| 8 | 375 | 10.0 | 21.5 | 27.2 | 327 | 2244 |
|  |  | 20.0 | 32.4 | 29.6 | 618 | 1886 |
|  |  | 25.0 | 37.1 | 29.9 | 679 | 1746 |
|  |  | 30.0 | 47.3 | 37.5 | 581 | 1390 |
| 15 | 200 | 15.0 | 26.0 | 30.1 | 308 | 1571 |
|  |  | 25.0 | 41.5 | 35.0 | 631 | 1924 |
|  |  | 30.0 | 48.8 | 38.5 | 572 | 1498 |
|  |  | 35.0 | 69.8 | 71.3 | 433 | 827 |
| 20 | 150 | 25.0 | 52.1 | 48.9 | 461 | 2250 |
|  |  | 30.0 | 57.5 | 52.0 | 346 | 1149 |
| 60 | 50 | 25.0 | 27.8 | 48.6 | 510 | 2615 |
|  |  | 30.0 | 31.7 | 44.6 | 622 | 3009 |
|  |  | 35.0 | 32.4 | 35.1 | 623 | 2756 |
|  |  | 40.0 | 43.3 | 42.9 | 726 | 2692 |
|  |  | 45.0 | 39.5 | 38.5 | 608 | 2419 |

In general, tensile strength increased to a maximum and then decreased as silica level increased. Elongation decreased as silica level increased. Clarity decreased as silica level increased. However, the film clarity in the "haze" condition became lower than initial-clarity as the silica level was increased.

Example 6

A clear sealant was prepared by mixing, under a vacuum so that air was not mixed into the emulsion, 139 parts of the emulsion of Example 1 (100 parts of polydimethylsiloxane) and 2.5 parts of precipitated silica having an average particle size of about 19 nanometers (170 m²/g surface area)(T600 from Pittsburgh Plate Glass). This mixing results in a thick phase which allows the mixer to shear the silica and disperse it well throughout the emulsion. Then 0.5 part of stanous octoate was mixed in, followed by 1 part of gamma-methacrlyoxypropyltrimethoxysilane. After about 30 minutes to allow for the reaction of the silane crosslinker and the emulsion polymer, the emulsion was neutralized by adding 1 part of a 14 percent solution of ammonium hydroxide. The emulsion was then reinforced by adding 2 parts of colloidal silica as a 50 percent dispersion in water, the silica having an average particle size of about 20 nanometers (150 m²/g surface area)(Nalco 1050 from Nalco Chemical Company). The resulting emulsion had a solids content of about 71 percent by weight, a paste viscosity and appeared as a translucent material.

A sample was prepared by casting a 60 mil wet film and allowing to dry for 14 days at room conditions. The skin over time was 30 minutes and the tack free time was 1 hour. After drying, samples were cut form the film and evaluated for physical properties. The tensile strength was 69 psi, the elongation was 1750 percent and the Shore A durometer was 14. The 47 mil thick dried film was evaluated on a Hunter Hazemeter for clarity. The light transmittance was 85 percent and the haze was 99 percent.

## Claims

1.   An aqueous silicone emulsion comprising
(A) 100 parts by weight of crosslinked polydiorganosiloxane in the form of a dispersed phase with less than 10 percent of the dispersed phase particles having a particle size greater than 1000 nanometers,
(B) from 0.7 to 2.0 parts by weight of surfactant of the formula $RSO_4M$ where R is a hydrocarbon radical of from 6 to 20 carbon atoms and M is selected from the group consisting of alkali metal cations and ammonium derivatives, and
(C) from 32 to 900 parts by weight of water, the emulsion yielding a clear elastomer upon removal of the water.

2.   A process for producing an aqueous silicone emulsion comprising
(A) mixing (1) from 0.7 to 2.0 parts by weight of surfactant of the formula $RSO_4M$ where R is a hydrocarbon radical of from 6 to 20 carbon atoms and M is selected from the group consisting of alkali metal cations and ammonium derivatives, and (2) from 32 to 900 parts by weight of water,
(B) replacing the M ion of the surfactant with hydrogen by either exposure to ion exchange resin or addition of strong acid,
(C) adding 100 parts by weight of a hydroxyl endblocked polydiorganosiloxane, then
(D) emulsifying the mixture to give a dispersed phase of polydiorganosiloxane particles with less than 10 percent of the dispersed particles having a particle size greater than 1000 nanometers,
(E) allowing the polydiorganosiloxane in dispersed phase to polymerize until the desired molecular weight is reached, then
(F) adding sufficient base to raise the pH to greater than 5, then
(G) crosslinking the dispersed polydiorganosiloxane, to give an emulsion which yields a silicone elastomer upon removal of the water.

3.   A process for producing an aqueous silicone emulsion comprising
(A) emulsifying a mixture of (1) from 0.7 to 2.0 parts by weight of surfactant of the formula $RSO_4M$ where R is a hydrocarbon radical of from 6 to 20 carbon atoms and M is selected from the group consisting of alkali metal cations and ammonium derivatives, (2) from 32 to 900 parts by weight of water, and (3) 100 parts by weight of a hydroxyl endblocked polydiorganosiloxane, to give a dispersed phase of polydiorganosiloxane particles with less than 10 percent of the dispersed particles having a particle size greater than 1000 nanometers,
(B) replacing the M ion of the surfactant with hydrogen by either exposure to ion exchange resin or addition of strong acid and then allowing the polydiorganosiloxane in dispersed phase to polymerize until the desired molecular weight is reached, then
(C) adding sufficient base to raise the pH to greater than 5, then
(D) crosslinking the dispersed polydiorganosiloxane, to give an emulsion which yields a clear silicone elastomer upon removal of the water.

4.   A process for producing an aqueous silicone emulsion comprising
(A) mixing (1) from 0.7 to 2.0 parts by weight of surfactant of the formula $RSO_4M$ where R is a hydrocarbon radical of from 6 to 20 carbon atoms and M is selected from the group consisting of alkali metal cations and ammonium derivatives, and (2) from 32 to 900 parts by weight of water,
(B) replacing the M ion of the surfactant with hydrogen by either exposure to ion exchange resin or addition of strong acid,
(C) adding 100 parts by weight of a hydroxyl endblocked polydiorganosiloxane having a viscosity of less than 0.3 Pa·s at 25°C., then
(D) emulsifying the mixture to give a dispersed phase of polydiorganosiloxane particles with less than 10 percent of the dispersed particles having a particle size greater than 1000 nanometers,

(E) allowing the polydiorganosiloxane in dispersed phase to polymerize until the desired molecular weight is reached, then

(F) adding sufficient base to raise the pH to greater than 5, then

(G) adding from 0.25 to 5.0 parts of a crosslinker of the formula $R'_nSi(OR'')_{4-n}$ where $R'$ is a substituted alkyl radical of 1 to 6 carbon atoms, $R''$ is an alkyl radical of 1 to 3 carbon atoms and n is 0 or 1, then

(H) adding from 0.25 to 1.0 parts of an organic tin catalyst, then

(I) allowing the ingredients to react at room temperature for at least 15 minutes,

(J) adding sufficient base to raise the pH to greater than 9, then

(K) adding from 2.5 to 45 parts of colloidal silica as an aqueous dispersion, the silica having an average particle diameter of less than 60 nanometers, to give an emulsion having from 10 to 75 percent by weight solids content which yields a clear, reinforced silicone elastomeric coating upon removal of the water.

5.  A process for producing an aqueous silicone emulsion comprising

(A) mixing (1) from 0.7 to 2.0 parts by weight of surfactant of the formula $RSO_4M$ where R is a hydrocarbon radical of from 6 to 20 carbon atoms and M is selected from the group consisting of alkali metal cations and ammonium derivatives, and (2) from 32 to 40 parts by weight of water,

(B) replacing the M ion of the surfactant with hydrogen by either exposure to ion exchange resin or addition of strong acid,

(C) adding 100 parts by weight of a hydroxyl endblocked polydiorganosiloxane, then

(D) emulsifying the mixture to give a dispersed phase of polydiorganosiloxane particles with less than 10 percent of the dispersed particles having a particle size greater than 1000 nanometers,

(E) allowing the polydiorganosiloxane in dispersed phase to polymerize until the desired molecular weight is reached, then

(F) adding sufficient base to raise the pH to greater than 5, then

(G) adding from 0.5 to 5 parts of precipitated or fumed silica having an average particle size of less than 60 nanometers or sufficient organic thickener to give the desired rheology and mixing until uniformly dispersed,

(H) adding from 0.375 to 1.0 part of stannous octoate,

(I) adding from 0.5 to 1.5 part of gamma-methacryloxypropyltrimethoxysilane and allowing the mixture to react for at least 30 minutes, then

(J) adding sufficient base to raise the pH above 9, then

(K) admixing from 2 to 5 parts of colloidal silica having an average particle size less than 60 nanometers, as an aqueous dispersion, to give an emulsion having from 65 to 75 percent solids and a paste viscosity which dries to a translucent, reinforced elastomer upon removal of the water.